# EUROPÄISCHE PATENTANMELDUNG

(11) **EP 3 482 980 A1**
(43) Veröffentlichungstag der Anmeldung: **15.05.2019**
(21) Anmeldenummer: 18200159.4
(22) Anmeldetag: 12.10.2018
(51) Int. Cl.: B60H 1/00, C09K 5/06

(54) **HEIZSYSTEM MIT WÄRMESPEICHERANORDNUNG FÜR HYBRID- ODER ELEKTROFAHRZEUGE UND VERFAHREN DAZU**

(30) Priorität: 14.11.2017 DE 102017126775
(71) Anmelder: Konvekta Aktiengesellschaft, 34613 Schwalmstadt-Ziegenhain (DE)
(72) Erfinder: Sonnekalb, Michael, 34613 Schwalmstadt (DE); Best, Pascal, 34633 Ottrau (DE)
(74) Vertreter: Lindinger, Bernhard

(57) **Zusammenfassung**

Die Erfindung betrifft ein Heizsystem (10) für ein Hybrid- oder Elektrofahrzeug, umfassend wenigstens eine im Generatorbetrieb betreibbare Elektromaschine (12), wenigstens eine Wärmespeicheranordnung (32), wenigstens eine der Wärmespeicheranordnung (32) zugeordnete elektrische Heizeinrichtung (30) und eine Schaltanordnung (26), wobei die Schaltanordnung (26) dazu ausgebildet ist, wahlweise die wenigstens eine Elektromaschine (12) mit der wenigstens einen elektrischen Heizeinrichtung (30) und/oder einem elektrischen Energiespeicher (28) zu koppeln, wenn die wenigstens eine Elektromaschine (12) während eines Bremsvorgangs im Generatorbetrieb arbeitet, wobei wenigstens eine Wärmespeicheranordnung (32) zur Wärmespeicherung ein Latentwärmespeichermittel (34), umfassend zumindest einen Zuckeralkohol, der wenigstens eine Verbindung umfasst, die ausgewählt ist aus der Gruppe, bestehend aus Erythrit, Xylit, Threit, Mannit und Dulcit, aufweist. Mit einem derartigen Heizsystem (10) lässt sich Wärme zum Heizen gut speichern. Auch betrifft die Erfindung ein Verfahren zum Wärmespeichern und Heizen mit einem derartigen Heizsystem (10).

## Beschreibung

### Gebiet der Technik:

Die Erfindung betrifft ein Heizsystem für ein Hybrid- oder Elektrofahrzeug gemäß dem Oberbegriff des Anspruchs 1. Das Heizsystem ist derart ausgebildet, dass es mittels einer im Generatorbetrieb betreibbaren Elektromaschine beim Bremsvorgang des Hybrid- oder Elektrofahrzeugs gewonnene elektrische Energie in Wärme umgewandelt zum beispielsweisen Erwärmen von Luft für den Fahrzeuginnenraum nutzt. Ferner betrifft die Erfindung ein Hybrid- oder Elektrofahrzeug mit einem derartigen Heizsystem, eine Wärmespeicheranordnung zu einem derartigen Heizsystem und ein Verfahren zum Wärmespeichern sowie Abgeben von gespeicherter Wärme mittels eines derartigen Heizsystems. Bei einem Hybridfahrzeug ist eine von zumindest zwei Antriebsarten des Fahrzeugs elektrisch. Bei einem Elektrofahrzeug ist die Antriebsart nur rein elektrisch.

### Stand der Technik:

Bekannt sind Heizsysteme für ein Hybrid- oder Elektrofahrzeug, die durch Bremsen in einer im Generatorbetrieb betreibbaren Elektromaschine generierte elektrische Energie nutzen. Die so durch Rekuperation generierte elektrische Energie wird dabei für das Heizen beispielsweise der Luft für den Fahrzeuginnenraum in Wärme umgewandelt. Die Speicherkapazität bei elektrischen Energiespeichern ist bisher kostenintensiv und aufwendig. Ein elektrischer Energiespeicher des Hybrid- oder Elektrofahrzeugs hat nur eine begrenzte Speicherkapazität, wobei die dort gespeicherte Energie vorrangig für den Antrieb verwendet wird. Es sind Heizsysteme für Hybrid- oder Elektrofahrzeuge bekannt, bei denen die beim Bremsen gewonnene elektrische Energie in einer Wärmespeicheranordnung als Wärme umgewandelt speicherbar ist. In DE 10 2012 006 312 A1 sind ein Verfahren und Kraftfahrzeug offenbart, bei dem Bewegungsenergie eines Hybrid- oder Elektrofahrzeugs beim Bremsen durch Rekuperation in elektrische Energie und dann in Wärme umgewandelt wird, und als Wärme in einer Wärmespeicheranordnung gespeichert wird, wobei dessen Speichermedium ein Adsorptionsmittel ist, das andere Stoffe unter Abgabe von Wärme adsorbieren und bei Aufnahme von Wärme desorbieren kann. Dabei existiert ein Arbeitsmedium, das vom Adsorptionsmittel adsorbiert/desorbiert werden kann. Nachteilig sind bei einem derartigen Heizsystem eine Vorrichtung zum Auffangen von desorbiertem Arbeitsmittel sowie sowohl ein Adsorptionsmittel als auch ein Arbeitsmedium notwendig. In WO 2017/174803 A1, DE 10 2008 058 712 A1 und DE 10 2009 030 541 A1 sind auch jeweils ein Heizsystem für ein Hybrid- oder Elektrofahrzeug offenbart, bei denen die beim Bremsen gewonnene elektrische Energie in einem Wärmespeicheranordnung als Wärme umgewandelt speicherbar ist. Dabei erfolgt die Speicherung der Wärme in einer Latentwärmespeicheranordnung. Eine Latentwärmespeicheranordnung enthält als Speichermedium Latentwärmespeichermittel. Das Latentwärmespeichermittel ist in der Lage, einen Phasenübergang zu durchlaufen, wodurch insbesondere durch den einen Phasenübergang, wie beispielsweise von fest nach flüssig, die dabei aufgenommene Wärme gespeichert wird und nachfolgend bei entsprechend umgekehrten Phasenübergang Wärme freigegeben wird. Diese Wärme wird als latente Wärme bezeichnet. So sind in DE 10 2008 058 712 A1 als Latentwärmespeichermittel in ihrem Kristallisationszustand durch Wärme beeinflussbare nicht näher spezifizierte Salze offenbart. Hierbei wird aber nur der Kristallisationszustand beeinflusst. Ein zur Speicherung von latenter Wärme effektiver Phasenübergang ist der von fest nach flüssig. In DE 10 2009 030 541 A1 wird dafür als Latentwärmespeichermittel eine nicht näher spezifizierte metallische Legierung vorgeschlagen. Zwar sind metallische Legierungen mit hoher Schmelzenthalpie bekannt, doch liegt dabei der Schmelzpunkt bei sehr hohen Temperaturen von oft deutlich über 400 Grad Celsius. Dieses benötigt eine aufwendige Wärmeisolierung, denn insbesondere die Gefahr von Verbrennungen für Fahrzeuginsassen ist bei so hohen Temperaturen ein Problem. Von daher ist die Position einer derartigen Wärmespeicheranordnung in der Nähe von Fahrzeuginsassen untunlich. Ferner verursacht die Nutzung der Wärme bei so hohen Speichertemperaturen Schwierigkeiten, denn die Temperaturdifferenz zur Temperatur der zu erwärmenden Luft im für Fahrzeuginsassen vorgesehenen Fahrzeuginnenraum ist mit mehreren 100 Grad Celsius sehr hoch. Einige metallische Legierungen sind zudem für den Menschen toxisch.

Der Erfindung liegt daher die erste Aufgabe zugrunde, ein verbessertes Heizsystem für ein Hybrid- oder Elektrofahrzeug, bei dem beim Bremsvorgang generierte elektrische Energie in Wärme umgewandelt in zumindest einer Wärmespeicheranordnung im Fahrzeug als Wärme speicherbar ist, bereitzustellen.

Eine zweite entsprechende Aufgabe bezieht sich auf eine verbesserte Wärmespeicheranordnung zu einem derartigen Heizsystem bereitzustellen. Die dritte entsprechende Aufgabe bezieht sich auf ein Hybrid- oder Elektrofahrzeug mit einem derartigen Heizsystem bereitzustellen. Eine entsprechende vierte Aufgabe ist die Bereitstellung eines verbesserten Verfahrens zum Wärmespeichern sowie Abgeben von gespeicherter Wärme für das Heizen von Luft für einen oder in einem für Fahrzeuginsassen vorgesehenen Fahrzeuginnenraum eines Hybrid- oder Elektrofahrzeugs.

### Zusammenfassung der Erfindung:

Die erste Aufgabe wird durch ein Heizsystem gemäß den Merkmalen des Anspruch 1 gelöst. Dadurch, dass das Heizsystem für ein Hybrid- oder Elektrofahrzeug wenigstens eine im Generatorbetrieb betreibbare Elektromaschine, wenigstens eine Wärmespeicheranordnung, wenigstens eine der Wärmespeicheranordnung zugeordnete elektrische Heizeinrichtung und eine Schaltanordnung umfasst, wobei die Schaltanordnung dazu ausgebildet ist, wahlweise die wenigstens eine Elektromaschine mit der wenigstens einen elektrischen Heizeinrichtung und/oder einem elektrischen Energiespeicher zu koppeln, wenn die wenigstens eine Elektromaschine während eines Bremsvorgangs im Generatorbetrieb arbeitet, und wobei wenigstens eine Wärmespeicheranordnung zur Wärmespeicherung ein Latentwärmespeichermittel, umfassend zumindest einen Zuckeralkohol, der wenigstens eine Verbindung umfasst, die ausgewählt ist aus der Gruppe, bestehend aus Erythrit, Threit, Xylit, Mannit und Dulcit, aufweist, wird die erste Aufgabe gelöst. Ein derartiges Heizsystem hat die Möglichkeit, die beim Bremsvorgang von Bewegungsenergie in elektrische Energie umgewandelte Energie wiederum in Wärme umzuwandeln und in einer effektiven Wärmespeicheranordnung zwischenzuspeichern. Ein Zuckeralkohol, der aus der Gruppe bestehend aus Erythrit, Threit, Xylit, Mannit und Dulcit ausgewählt ist, verfügt über Schmelztemperaturen, die deutlich über der üblichen Raumtemperatur von ungefähr 20 Grad Celsius aber dennoch unterhalb von 200 Grad Celsius liegen, was keine sonderlich hohen Ansprüche an die Handhabung und Wärmeisolierung im Fahrzeug stellt. Xylit hat die Summenformel C5H12O5, Erythrit und Threit haben jeweils die Summenformel C4H10O4 und Mannit und Dulcit jeweils die Summenformel C6H14O6, wobei die Konfiguration bei Erythrit und Dulcit im Gegensatz zu Threit und Mannit spiegelsymmetrisch jeweils bezogen auf die Kettenmitte ist. So ist bereits der Einsatz derartiger Zuckeralkohole als Latentwärmespeichermittel in Hitzeschutzsystemen für Messsonden bei geotechnischen Tiefenbohrungen in EP 0 236 382 B1 bekannt. Derartige Zuckeralkohole besitzen eine hohe Schmelzenthalpie, weisen eine gute Wärmestabilität auf und sind für Menschen nicht oder nur wenig toxisch. Auch in der Nähe von Fahrzeuginsassen kann ohne Probleme mit entsprechender Wärmeisolierung die Wärmespeicheranordnung im Fahrzeuginnenraum positioniert werden. Somit besteht eine hohe Flexibilität bei der Wahl des Standorts der Wärmespeicheranordnung im Fahrzeug, wobei die hohe Dichte von über 1,4 kg/dm³ im festen Zustand derartiger Zuckeralkohole bei der hoher Schmelzenthalpie keine hohen Volumenanforderungen an den Stauraum für die Wärmespeicheranordnung mit einem erfindungsgemäßen Latentwärmespeichermittel stellt.

In den Unteransprüchen sind vorteilhafte Ausgestaltungen, Weiterbildungen und Verbesserungen des jeweiligen Gegenstandes der Erfindung angegeben.

Gemäß einer vorteilhaften Ausgestaltung des vorliegenden erfindungsgemäßen Heizsystems umfasst das Latentwärmespeichermittel ausschließlich oder nahezu ausschließlich Erythrit. Erythrit hat einen mit circa 120 Grad Celsius eine nicht zu hohe sowie für die Wärmespeicherung und Erwärmung der Luft für einen Fahrzeuginnenraum geeignete Schmelztemperatur und besitzt bei einer Dichte von 1,46 kg/dm³ eine hohe volumenbezogene Schmelzenthalpie von 488 kJ/dm³. Erythrit ist für den Menschen nicht toxisch und kostengünstig. Ferner ist auch noch sensible Wärme nach dem Erstarren des Erythrits bei über 100 Grad Celsius bis hinunter zu weniger als 60 Grad Celsius für das Heizsystem nutzbar. Folglich ist Erythrit als der alleinige oder als wesentlicher Bestandteil von einem Latentwärmespeichermittel für eine Wärmespeicheranordnung eines erfindungsgemäßen Heizsystems besonders gut geeignet.

Nach einer anderen vorteilhaften Ausgestaltung des vorliegenden erfindungsgemäßen Heizsystems umfasst das Latentwärmespeichermittel eine Mischung aus zwei oder mehreren Zuckeralkoholen mit Verbindungen aus der Gruppe, bestehend aus Erythrit, Threit, Xylit, Mannit und Dulcit. Durch derartige Mischungen, wie insbesondere eutektische Mischungen, lassen sich die Parameter aus Schmelztemperatur, Dichte und massebezogener sowie volumenbezogene Schmelzenthalpie hin zu einer für das erfindungsgemäße Heizsystem verbesserten Wärmespeicherung und Heizung der Luft für einen Fahrzeuginnenraum verändern. Beispielsweise beträgt bei einer eutektischen Mischung von Mannit und Dulcit mit einem Molverhältnis von 50 zu 50 die Dichte 1,50 kg/dm³, die volumenbezogene Schmelzenthalpie 423 kJ/dm³ und die Schmelztemperatur circa 153 Grad Celsius, was insbesondere zu den einzelnen Zuckeralkoholen Mannit und Dulcit eine vorteilhaft verringerte Schmelztemperatur ist.

Vorzugsweise ist die wenigstens eine elektrische Heizeinrichtung dazu ausgebildet, das Latentwärmespeichermittel maximal auf eine Temperatur im Bereich zwischen 121 Grad Celsius bis 200 Grad Celsius zu erwärmen. Dadurch kann die elektrische Heizeinrichtung das jeweilige Latentwärmespeichermittel, wie beispielsweise Erythrit, problemlos schmelzen und so latente Wärme im Latentwärmespeichermittel gut gespeichert werden. Außerdem ist die maximale Temperatur des geschmolzenen Latentwärmespeichermittels der Wärmespeicheranordnung des erfindungsgemäßen Heizsystems so noch nicht zu hoch für die Wärmespeicherung und Heizung der Luft für einen Fahrzeuginnenraum. Damit ist die Gefahr des Erreichens des jeweiligen Siedepunktes der besagten Zuckeralkohole unterbunden und dennoch auch sensible Wärme im verflüssigten Latentwärmespeichermittel speicherbar.

Gemäß einer vorteilhaften Weiterbildung des erfindungsgemäßen Heizsystems umfasst das Latentwärmespeichermittel als Unterkühlungsinhibitor ein anorganisches Salz ausgewählt aus Phosphaten, Sulfaten, Pyrophosphaten, Silbersalzen anorganischer Säuren oder Silberhalogeniden. Damit wird die Verfestigung des/der Zuckeralkohol(s)/e des Latentwärmespeichermittels durch Verhinderung von unterkühlten flüssigen Bereichen verbessert und so die Speicherkapazität bezüglich latenter Wärme erhöht.

Vorzugsweise ist die Schaltanordnung des erfindungsgemäßen Heizsystems dazu ausgebildet, die wenigstens eine Elektromaschine im Generatorbetrieb während eines Bremsvorgangs mit der wenigstens einen der zumindest einen Wärmespeicheranordnung zugeordneten elektrischen Heizeinrichtung dann zu koppeln, wenn der Ladezustand des elektrischen Energiespeichers über einem vorbestimmten Grenzwert liegt oder diesen überschreitet. Dadurch ist vorteilhaft ein Vorrang der Speicherung der beim Bremsvorgang generierten elektrischen Energie im elektrischen Energiespeicher installiert, so dass die durch Rekuperation generierte elektrische Energie vorrangig für den Antrieb des Hybrid- oder Elektrofahrzeugs zur Verfügung steht und erst nachrangig zur Wärmespeicherung in der Wärmespeicheranordnung eingesetzt wird.

Vorzugsweise ist die Schaltanordnung des erfindungsgemäßen Heizsystems dazu ausgebildet, dass dann, wenn der von der wenigstens einen Elektromaschine im Generatorbetrieb während eines Bremsvorgangs generierte Ladestrom über einem vorbestimmten Grenzwert für den elektrischen Energiespeichers liegt oder diesen überschreitet, die Elektromaschine mit der wenigstens einen der zumindest einen Wärmespeicheranordnung zugeordneten elektrischen Heizeinrichtung für den über dem Grenzwert liegenden Teil des Ladestroms zu koppeln. Dadurch kann der überschüssige Teil der generierten elektrischen Energie, die der elektrische Energiespeicher aufgrund seiner Begrenzung für den Ladestrom nicht speichern kann, für die Wärmespeicherung in der zumindest einen Wärmespeicheranordnung genutzt werden.

Bevorzugt weist die Wärmespeicheranordnung des erfindungsgemäßen Heizsystems als Wärmeisolierschicht um zumindest einen überwiegenden Teil des Latentwärmespeichermittels einen Mantel mit Luft- oder Vakuumzwischenraum auf. Damit wird im Latentwärmespeichermittel gespeicherte Wärme besonders gut von der Umgebung wärmeisoliert und kann dadurch besonders lang gespeichert werden. Bei einer Position der Wärmespeicheranordnung in der Nähe von Fahrzeuginsassen im Fahrzeuginnraum ist vorteilhaft durch die gute thermische Isolierung die Gefahr von thermisch bedingten Verletzungen von Fahrzeuginsassen verringert beziehungsweise gebannt.

Gemäß einer vorteilhaften Ausgestaltung des vorliegenden erfindungsgemäßen Heizsystems ist wenigstens eine Wärmespeicheranordnung dazu ausgebildet, direkt hinter dem Fahrersitz positionierbar zu sein. Dadurch besteht die Möglichkeit, an sonst ungenutztem Raum im Fahrzeuginnenraum im Bereich für die Fahrzeuginnsassen die Wärmespeicheranordnung anzuordnen. Die Wärme wird dabei vorteilhaft in unmittelbarer Nähe zu dem zu heizenden Bereich des Fahrzeuginnenraums gespeichert. Insbesondere für einen üblicherweise im unteren Bereich des zu heizenden Fahrzeuginnenraums angeordneten Konvektionsheizkreislauf mit Konvektoren, wie beispielsweise bei einem Omnibus, ist der Wärmeverlust beim Wärmetransport von einer derart positionierten Wärmespeicheranordnung zu den Konvektoren wegen der besonderen Nähe gering. Entsprechende Vorteile der möglichen Positionierung gelten auch für die Variante, dass wenigstens eine Wärmespeicheranordnung des Heizsystems dazu ausgebildet ist, an, wie insbesondere auf, einem Radkasten positionierbar zu sein. Der Bereich auf beziehungsweise über einem Radkasten ist insbesondere in Omnibussen oft ungenutzt oder als Sitzplatz für Fahrgäste nur mit Einschränkungen des Platzbedarfs verbunden. Folglich eignet sich diese Position besonders gut für eine Wärmespeicheranordnung. Vorzugsweise misst die Wärmespeicheranordnung für die Positionierung hinter dem Fahrersitz in der Höhe maximal 181 Zentimeter, in der Breite maximal 42 Zentimeter und in der Tiefe maximal 83 Zentimeter, oder für die Positionierung an, wie insbesondere auf, einem Radkasten in der Höhe maximal 135 Zentimeter, in der Breite maximal 99 Zentimeter und in der Tiefe maximal 83 Zentimeter.
Dadurch ist der Platzbedarf der Wärmespeicheranordnung nicht übermäßig groß und je nach vorgesehener Positionierung oft noch geeignet bemessen.

Nach einer vorteilhaften Ausgestaltung des vorliegenden erfindungsgemäßen Heizsystems ist die wenigstens eine Wärmespeicheranordnung zur direkten Übertragung von in ihr gespeicherter Wärme an zu erwärmende mit einer Luftfördereinrichtung für den für Fahrzeuginnsassen vorgesehenen Fahrzeuginnraum geförderte Luft ausgebildet. Damit wird die zu erwärmende Luft unmittelbar mit der gespeicherten Wärme erwärmt, was den Wärmeverlust besonders gering hält und einen gesonderten Heizkreislauf mit eigenem zu erwärmenden Medium nicht erfordert, so dass Kosten, Gewicht, Material und Aufwand eingespart werden.

In Betracht kommen dabei beispielsweise rippenartig ausgeformte Oberflächen mit Wärmeleitverbindung zum Latentwärmespeichermittel der Wärmespeicheranordnung, die von der geförderten Luft bei Bedarf umströmt werden können.

Vorzugsweise ist der zumindest einen Wärmespeicheranordnung des Heizsystems wenigstens eine Wärmetauscheranordnung zur Übertragung von in der Wärmespeicheranordnung gespeicherter Wärme auf ein zu erwärmendes Medium zugeordnet. Eine Wärmetauscheranordnung ist besonders gut für einen effektiven Wärmeaustausch von im Latentwärmespeichermittel gespeicherter Wärme auf ein zu erwärmendes Medium geeignet. Je nach zu erwärmenden Medium wie beispielsweise Luft ist die Wärmetauscheranordnung entsprechend ausgebildet. Nach einer bevorzugten Ausgestaltung ist das zu erwärmende Medium Heizwasser eines Heizkreislaufs zum Heizen der Luft des für Fahrzeuginnsassen vorgesehenen Fahrzeuginnraums. Mit einem Heizkreislauf lassen sich die zu heizenden Bereiche eines Fahrzeugs besonders gut und effektiv erreichen. Ferner können bei einem Heizkreislauf problemlos neben der Wärmespeicheranordnung noch andere Wärmequellen, wie Abwärme von einem elektrischen Energiespeicher und bei einem Hybridfahrzeug vom Motor der nicht elektrischen Antriebsart zum Erwärmen des Heizwassers genutzt werden.

Die zweite Aufgabe wird durch eine Wärmespeicheranordnung zu einem erfindungsgemäßen Heizsystem, wobei die Wärmespeicheranordnung zur Wärmespeicherung ein Latentwärmespeichermittel, umfassend ausschließlich oder nahezu ausschließlich Erythrit, aufweist, gelöst.

Die dritte Aufgabe wird durch ein Hybrid- oder Elektrofahrzeug mit einem erfindungsgemäßen Heizsystem gelöst.

Gemäß einer vorteilhaften Ausgestaltung des erfindungsgemäßen Hybrid- oder Elektrofahrzeugs ist wenigstens eine Wärmespeicheranordnung des Heizsystems hinter dem Fahrersitz angeordnet. Dadurch wird oft sonst ungenutzter Platz im Fahrzeuginnenraum im Bereich für die Fahrzeuginnsassen mit einer Wärmespeicheranordnung genutzt. Die Wärme wird dabei vorteilhaft in unmittelbarer Nähe zu dem zu heizenden Bereich des Fahrzeuginnenraums gespeichert. Bei einer ebenso vorteilhaften Ausgestaltung des erfindungsgemäßen Hybrid- oder Elektrofahrzeugs ist die wenigstens eine Wärmespeicheranordnung des Heizsystems an, wie insbesondere auf, einem Radkasten angeordnet. Der Bereich auf beziehungsweise über einem Radkasten ist oft ungenutzt oder als Sitzplatz für Fahrgäste nur mit Einschränkungen des Platzbedarfs verbunden. Folglich eignet sich diese Position besonders gut für eine Wärmespeicheranordnung.

Besonders von Vorteil ist ein Omnibus als ein Hybrid- oder Elektrofahrzeug, also ein Hybrid- oder Elektroomnibus, mit einem erfindungsgemäßen Heizsystem. Bei einem zu heizenden großen Bereich wie den Fahrgastbereich ist ein erfindungsgemäßes Heizsystem mit Wärmespeicheranordnung besonders sinnvoll. Die Positionen der wenigstens einen Wärmespeicheranordnung auf dem Radkasten und/oder hinter dem Fahrersitz sind in einem Omnibus gut zu realisieren und insbesondere wegen der großen Nähe zum oft im unteren Bereich befindlichen Konvektionsheizkreislauf besonders effektiv.

Die vierte Aufgabe wird durch ein Verfahren zum Wärmespeichern sowie Abgeben von gespeicherter Wärme gemäß den Merkmalen des Anspruchs 13 gelöst. Dadurch, dass das Verfahren zum Wärmespeichern sowie Abgeben von gespeicherter Wärme mit einem in einem Hybrid- oder Elektrofahrzeug integrierten erfindungsgemäßen Heizsystem die Schritte erstens a) des Umwandelns von Bewegungsenergie beim Bremsen des Hybrid- oder Elektrofahrzeugs in elektrische Energie mittels wenigstens einer als Generator betriebenen Elektromaschine, zweitens b) des Umwandelns der elektrischen Energie in Wärme mittels der wenigstens einen der zumindest einen Wärmespeicheranordnung des Heizsystems zugeordneten elektrischen Heizeinrichtung und drittens die Erfindung kennzeichnend die weiteren Schritte c) und d) des Speicherns c) von nach dem Schritt b) umgewandelter Wärme im Latentwärmespeichermittel der wenigstens einen Wärmespeicheranordnung des Heizsystems durch Speicherung als sensible Wärme und/oder als durch Phasenumwandlung latente Wärme im zumindest einen Zuckeralkohol, der wenigstens eine Verbindung umfasst, die ausgewählt ist aus der Gruppe, bestehend aus Erythrit, Threit, Xylit, Mannit und Dulcit, und d) des bei Bedarf Abgebens von in der wenigstens einen Wärmespeicheranordnung im Latentspeichermittel gespeicherter sensibler und/oder latenter Wärme für das Heizen von Luft für den oder in dem für Fahrzeuginsassen vorgesehenen Fahrzeuginnraum umfasst, wird die fünfte Aufgabe gelöst. Die oben zum erfindungsgemäßen Heizsystem angeführten Vorteile gelten entsprechend für das erfindungsgemäße Verfahren.

Vorzugsweise umfasst bei dem erfindungsgemäßen Verfahren das Latentwärmespeichermittel ausschließlich oder nahezu ausschließlich Erythrit und das Umwandeln von elektrischer Energie in Wärme im Verfahrensschritt b) stoppt automatisch bei Überschreiten einer vorbestimmten Temperatur des Latentwärmespeichermittels im Bereich zwischen 121 Grad Celsius bis 200 Grad Celsius. Erythrit hat mit circa 120 Grad Celsius eine nicht zu hohe Schmelztemperatur und besitzt mit insbesondere einer hohen volumenbezogenen Schmelzenthalpie gute Wärmespeichereigenschaften. Erythrit ist für den Menschen nicht toxisch und kostengünstig. Durch das automatische Stoppen der Umwandlung der elektrischen Energie in Wärme bei der vorbestimmten Temperatur wird das flüssige Erythrit nicht für das Heizen zu hoch erhitzt und die Gefahr des Erreichens des Siedepunktes gebannt. Die Nutzung eines Latentspeichermittels bestehend aus oder nahezu aus Erythrit ist somit besonders vorteilhaft.

Gemäß einer vorteilhaften Weiterbildung des erfindungsgemäßen Verfahrens erfolgen die Verfahrensschritte b) und c), wenn der Ladezustand eines elektrischen Energiespeichers über einem vorbestimmten Grenzwert liegt oder diesen überschreitet und ansonsten die im ersten Verfahrensschritt a) durch Umwandlung erzeugte elektrische Energie dem elektrischen Energiespeicher zugeführt wird. Damit wird vorteilhaft vorrangig der elektrische Energiespeicher für den Antrieb aufgeladen und erst nachrangig die elektrische Energie in Wärme umgewandelt im Latentwärmespeichermittel der Wärmespeicheranordnung gespeichert.

Bevorzugt erfolgen die Verfahrensschritte b) und c) wenn dann nur für den Teil der in Schritt a) generierten elektrischen Energie, der dem über einem vorbestimmten Grenzwert liegenden Teil des beim Bremsen des Hybrid- oder Elektrofahrzeugs mittels der wenigstens einen als Generator betriebenen Elektromaschine generierten Ladestroms zugeordnet ist. So kann der andere Teil der elektrischen Energie vorrangig zum Laden des elektrischen Energiespeichers ohne Überschreitung eines oberen Grenzwerts des für den elektrischen Energiespeicher möglichen Ladestroms genutzt werden.

Nach einer vorteilhaften Weiterbildung des erfindungsgemäßen Verfahrens erfolgt der bedarfsweise vierte Verfahrensschritt des Abgebens von in der wenigstens einen Wärmespeicheranordnung im Latentspeichermittel gespeicherter sensibler und/oder latenter Wärme für das Heizen von Luft für den oder in dem für Fahrzeuginsassen vorgesehenen Fahrzeuginnenraum erst dann, wenn die Temperatur der Luft im für Fahrzeuginsassen vorgesehenen Fahrzeuginnenraum unter einer vorbestimmten Solltemperatur liegt oder diese unterschreitet. Diese Regelung verbessert die Handhabung des Heizens von Luft für den oder in dem für Fahrzeuginsassen vorgesehenen Fahrzeuginnenraum.

Schließlich können auch die Merkmale der Unteransprüche bezüglich des erfindungsgemäßen Heizsystems, bezüglich des erfindungsgemäßen Hybrid- oder Elektrofahrzeugs und bezüglich des erfindungsgemäßen Verfahrens jeweils innerhalb der demselben Hauptanspruch zugeordneten Unteransprüchen im Wesentlichen frei miteinander und nicht durch die in den Ansprüchen vorliegende Reihenfolge festgelegt kombiniert werden, sofern sie unabhängig voneinander sind.

### Kurze Beschreibung der Zeichnungen:

Anhand der Zeichnungen werden Ausführungsbeispiele der Erfindung erläutert.

Es zeigen
Figur 1 in Blockdarstellung ein Ausführungsbeispiel des erfindungsgemäßen Heizsystems,
Figur 2 in schematischer Darstellung ein Ausführungsbeispiel eins Hybrid- oder Elektrofahrzeugs als Omnibus mit einem eingebauten erfindungsgemäßen Heizsystem, und
Figur 3 ein Flussdiagramm eines Ausführungsbeispiels eines Verfahrens zum Wärmespeichern sowie Abgeben von gespeicherter Wärme mit einem in einem Hybrid- oder Elektrofahrzeug eingebauten erfindungsgemäßen Heizsystem.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

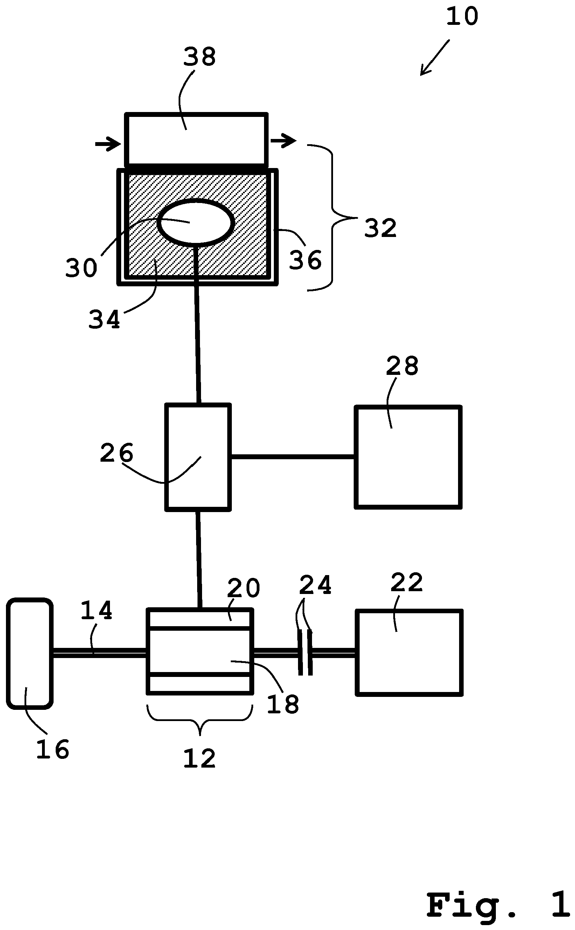

In Figur 1 ist in Blockdarstellung ein Ausführungsbeispiel des erfindungsgemäßen Heizsystems 10 in einem Hybrid- oder Elektrofahrzeug gezeigt. Die Elektromaschine 12 ist über eine Welle 14 mit wenigstens einem Rad 16 des Hybrid- oder Elektrofahrzeugs verbunden. Beim Bremsvorgang des Hybrid- oder Elektrofahrzeugs wird über die Welle 14 die Elektromaschine 12 mit einem Drehmoment beaufschlagt, wobei die mit einem Rotor 18 und Stator 20 versehene Elektromaschine 12 im Generatorbetrieb die Bewegungsenergie in elektrische Energie umwandelt. Diese Rekuperation in elektrische Energie beim Bremsen gemäß dem Prinzip der Wirbelstrombremse ist für Hybrid- oder Elektrofahrzeuge bekannte Technik. Die Elektromaschine 12 ist in diesem Ausführungsbeispiel auch als ein Antriebsmotor des Hybrid- oder Elektrofahrzeugs einsetzbar. Denkbar sind aber auch Elektromaschinen 12, die nur im Generatorbetrieb während des Bremsvorgangs eingesetzt werden. Ferner sind Ausführungsbeispiele denkbar, die mehrere Elektromaschinen 12, wie zum Beispiel pro Rad des Hybrid- oder Elektrofahrzeugs eine, enthalten. Bei der Ausführung als ein Hybridfahrzeug ist an den Antriebsstrang eine Brennkraftmaschine 22 mit einer schaltbaren Kupplung 24 ankoppelbar. Bei einer Ausführung als Elektrofahrzeug fällt die Brennkraftmaschine 22 samt Kupplung 24 weg.

Die von der Elektromaschine 12 im Generatorbetrieb beim Bremsvorgang generierte elektrische Energie wird über eine elektrische Leitung zur Schaltanordnung 26 geleitet. Die Schaltanordnung 26 enthält übliche Schaltelemente, mit denen die im Generatorbetrieb arbeitende Elektromaschine 12 wahlweise einerseits mit dem elektrischen Energiespeicher 28 oder andererseits mit der elektrischen Heizeinrichtung 30 elektrisch verbunden beziehungsweise gekoppelt wird. Denkbar sind auch Schaltungen, bei denen die von der Elektromaschine 12 generierte elektrische Energie wahlweise gleichzeitig zum einen Teil zum elektrischen Energiespeicher 28 und zum anderen Teil zur elektrischen Heizeinrichtung 30 verteilt wird. In diesem Ausführungsbeispiel enthält die Schaltanordnung 26 eine Vorrangschaltung für Kopplung der Elektromaschine 12 mit dem elektrischen Energiespeicher 28 vor der Kopplung der Elektromaschine 12 mit der elektrischen Heizeinrichtung 30. Erst beim Erreichen oder Überschreiten eines Ladezustands von beispielsweise 85 % des Maximalwerts des elektrischen Energiespeichers 28 wird die beim Bremsvorgang im Generatorbetrieb arbeitende Elektromaschine 12 mit der Heizeinrichtung 30 gekoppelt. Der elektrische Energiespeicher 28 ist ohne darauf beschränkt zu sein ein üblicher für den Elektroantrieb vorgesehene Lithium-Ionen-Batterie.

Die elektrische Heizeinrichtung 30 ist einer Wärmespeicheranordnung 32 zugeordnet. Die Wärmespeicheranordnung 32 enthält zum Speichern von Wärme ein Latentwärmespeichermittel 34. Die elektrische Heizeinrichtung 30 steht mit dem Latentwärmespeichermittel 34 in Wärmeleitung. In diesem Fall befindet sich die elektrische Heizeinrichtung 30 direkt im Latentwärmespeichermittel 34. Die elektrische Heizeinrichtung 30 umfasst für die Erwärmung des Latentwärmespeichermittels 34 ein oder mehrere PTC-Heizelemente. Genauso kann die elektrische Heizeinrichtung 30 beispielsweise ein oder mehrere in das Latentwärmespeichermittel 34 eingelassene elektrische Heizstäbe umfassen. Das Latentwärmespeichermittel 34 enthält ausschließlich oder nahezu ausschließlich den Zuckeralkohol Erythrit. Denkbar als Latentwärmespeichermittel 34 sind auch die anderen Zuckeralkohole Threit, Xylit, Mannit und Dulcit sowie Mischungen dieser Zuckeralkohole wie beispielsweise die eutektische Mischung von Mannit und Dulcit im Molmassenverhältnis 50 zu 50. Die Verbindungen Threit, Xylit, Erythrit, Mannit und Dulcit sowie die eutektische Mischung von Mannit und Dulcit im Molmassenverhältnis 50 zu 50 haben die in der folgenden Tabelle aufgeführten Schmelzpunkte, Dichten und Schmelzenthalpieen.

**Tabelle**

| Substanz | | Schmelzpunkt | Dichte | Schmelzenthalpie | |
|---|---|---|---|---|---|
| | | (°C) | (kg/dm³) | (kJ/kg) | (kJ/dm³) |
| Threit | (T) | 71 | 1,46 | 223 | 326 |
| Xylit | (X) | 94 | 1, 52 | 240 | 365 |
| Erythrit | (E) | 120 | 1,46 | 334 | 488 |
| Mannit | (M) | 167 | 1,50 | 306 | 459 |
| Dulcit | (D) | 189 | 1,50 | 358 | 537 |
| M/D | 50:50 | 153 | 1,50 | 282 | 423 |

Dem Erythrit kann als eine besondere Ausführungsform des Latentwärmespeichermittels 34 ein anorganisches Salz ausgewählt aus Phosphaten, Sulfaten, Pyrophosphaten, Silbersalzen anorganischer Säuren oder Silberhalogeniden in geringen Mengen von beispielsweise 1% Gewichtsanteil als Unterkühlungsinhibitor beigefügt sein. Derartige Unterkühlungsinhibitoren für die Zuckeralkohole Erythrit, Mannit und Dulcit sind in EP 0 754 744 B1 aufgeführt.

Die elektrische Heizeinrichtung 30 ist darauf ausgelegt das in diesem Fall zumindest nahezu ausschließlich Erythrit umfassende Latentwärmespeichermittel 34 über den Schmelzpunkt von circa 120 Grad Celsius erwärmen zu können, so dass es sich verflüssigt. Bei Erreichen oder Überschreiten einer vorgegeben Maximaltemperatur im Bereich von 121 Grad Celsius bis 200 Grad Celsius für das Latentwärmespeichermittel 34, wie beispielsweise 130 Grad Celsius, wird die Energiezufuhr von elektrischer Energie zur elektrischen Heizeinrichtung 30 gestoppt. Sofern von der Elektromaschine 12 beim Bremsvorgang verfügbar, wird die elektrische Energie im Falle des Abkühlens des Lantentwärmespeichermittels 34 unter einen vorgegeben Temperaturwert, wie beispielsweise 124 Grad Celsius, wieder der elektrischen Heizeinrichtung 30 zugeführt.
Das Latentwärmespeichermittel 34 ist bis auf einen kleinen Teil seiner äußeren Oberfläche mit einer Wärmeisolierschicht 36 ummantelt. Die Wärmeisolierschicht 36 besteht ohne darauf beschränkt zu sein aus einer inneren und äußeren Lage aus wenig wärmeleitendem festem Material, wie beispielsweise einer Keramik, und einem Luft- oder Vakuumzwischenraum dazwischen. Direkt in Wärmeleitverbindung mit dem kleinen nicht derart wärmeisolierten Teil der äußeren Oberfläche des Latentwärmespeichermittels 34 ist eine Wärmetauscheranordnung 38 mit der Wärmespeicheranordnung 32 verbunden beziehungsweise dieser zugeordnet. Die Wärmetauscheranordnung 38 ist beispielsweise in der Art eines Plattenwärmetauschers ausgebildet. Durch die Wärmetauscheranordnung 38 kann ein zu erwärmendes Medium wie in diesem Fall Heizwasser eines Heizkreislaufs strömen. In der Wärmetauscheranordnung 38 kann bei Bedarf im Latentwärmespeichermittel 34 gespeicherte latente Wärme und/oder sensible Wärme an das zu erwärmende Medium abgegeben werden. Liegt die Temperatur der Luft des zu heizenden Fahrzeuginnenraums für die Fahrzeuginsassen unter einen vorgegeben Wert, wird die Wärmeübertragung von in der Wärmespeicheranordnung 32 gespeicherter Wärme an das zu erwärmende Medium zugeschaltet, das zur Erwärmung der Luft des beziehungsweise für den zu heizenden Fahrzeuginnenraum/s verwendet wird. Das zu erwärmende Medium kann beispielsweise auch direkt die für den zu heizenden Fahrzeuginnenraum vorgesehen Luft sein, die mittels einer Luftfördereinrichtung wie beispielsweise einem Radialgebläse vorher durch eine dafür ausgebildete an der Wärmespeicheranordnung 32 befindliche Wärmetauscheranordnung 38 geblasen wird. Eine derartige Wärmetauscheranordung 38 verfügt zum Beispiel über Rippen aus gut wärmeleitendem Material, die in Wärmeverbindung zum Latentwärmespeichermittel 34 stehen.

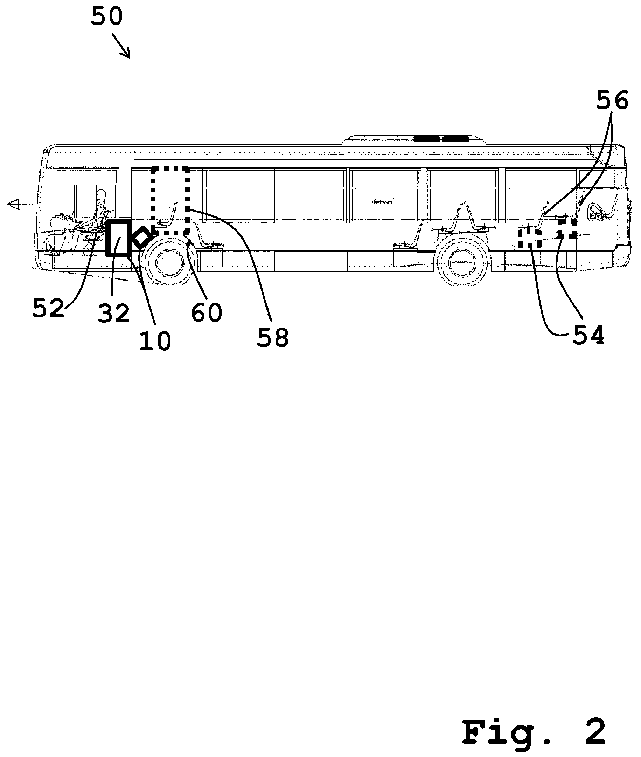

In Figur 2 ist in schematischer Darstellung ein Ausführungsbeispiel eines Hybrid- oder Elektrofahrzeugs 50 als Hybrid- oder Elektroomnibus mit einem eingebauten erfindungsgemäßen Heizsystem 10 gezeigt. Ein Fahrer ist auf dem Fahrersitz 52 ebenfalls schematisch dargestellt. Das Heizsystem 10 entspricht dem zu Figur 1 beschriebenen. Von den einzelnen Komponenten des Heizsystems 10 wie Elektromaschine, elektrische Heizeinrichtung und Schaltanordnung ist lediglich zur besseren Übersichtlichkeit einzeln von außen die Wärmespeicheranordnung 32 in Figur 2 dargestellt. Die Wärmespeicheranordnung 32 ist direkt hinter dem Fahrersitz 52 positioniert. Sie misst ohne darauf beschränkt zu sein in diesem Fall in der Breite 40 Zentimeter in der Höhe 80 Zentimeter und in der Tiefe 80 Zentimeter. Der Bauraum, in dem die Wärmespeicheranordnung 32 eingebaut ist, befindet sich in dem sonst ungenutzten Raum hinter dem Fahrersitz 52. Durch die guten Wärmespeichereigenschaften des erfindungsgemäßen Latentwärmespeichermittels umfassend zumindest einen Zuckeralkohol, der wenigstens eine Verbindung umfasst, die ausgewählt ist aus der Gruppe, bestehend aus Erythrit, Threit, Xylit, Mannit und Dulcit reicht das Volumen des Bauraums hinter dem Fahrersitz 52 für eine ausreichende Wärmespeicherung aus. Besonders geeignete alternative Positionen für wenigstens eine oder weitere Wärmespeicheranordnung/en 32 des erfindungsgemäßen Heizsystems 10 sind zum Beispiel der gestichelt dargestellte Bauraum 54 unter einem oder mehreren Fahrgastsitzen 56 und/oder der Bauraum 58 auf also über einem Radkasten 60 des als Hybrid- oder Elektroomnibus ausgebildeten Hybrid- oder Elektrofahrzeugs 50. Auch diese Bauräume 54 und 58 sind sonst nicht verbaut und bieten genügend Platz für erfindungsgemäße Wärmespeicheranordnungen 32 mit einer ausreichenden Wärmespeicherkapazität. Das als Hybrid- oder Elektroomnibus ausgebildete Hybrid- oder Elektrofahrzeug 50 kann ein reines Elektrofahrzeug oder ein Hybridfahrzeug sein. Beide Varianten sind für Figur 2 möglich.

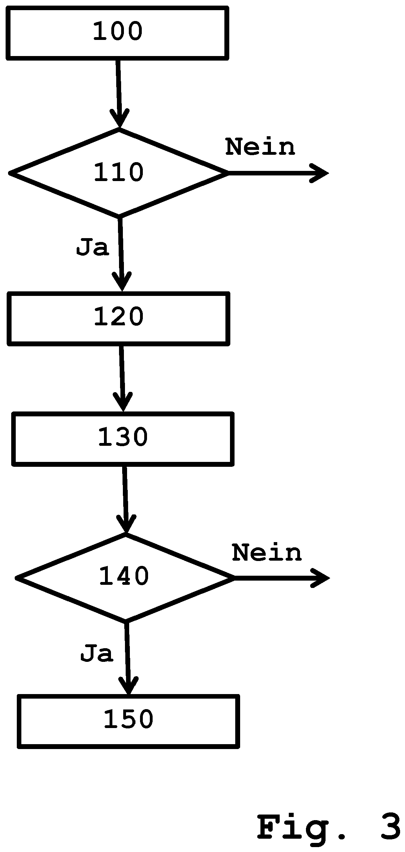

In Figur 3 ist ein Flussdiagramm eines Ausführungsbeispiels eines Verfahrens zum Wärmespeichern sowie Abgeben von gespeicherter Wärme mit einem in einem Hybrid- oder Elektrofahrzeug eingebauten erfindungsgemäßen Heizsystem gezeigt. Im ersten Schritt 100 wird die Bewegungsenergie beim Bremsen des Hybrid- oder Elektrofahrzeugs in elektrische Energie mittels einer dabei als Generator betriebenen Elektromaschine des erfindungsgemäßen Heizsystems umgewandelt. Diese elektrische Energie wird dann weiter voll oder teilweise im Schritt 120 in Wärme mittels einer der Wärmespeicheranordnung des Heizsystems zugeordneten elektrischen Heizeinrichtung umgewandelt, wenn "Ja" davor bei der automatischen Prüfung 110 der Ladezustand des elektrischen Energiespeichers des Hybrid- oder Elektrofahrzeugs über einem vorbestimmten Grenzwert von beispielsweise 80 % des Maximalwerts liegt oder diesen überschreitet oder wenn dann nur für den Teil der im ersten Schritt 100 generierten elektrischen Energie, der dem über einem weiteren vorbestimmten Grenzwert liegenden Teil des beim Bremsen des Hybrid- oder Elektrofahrzeugs mittels der wenigstens einen als Generator betriebenen Elektromaschine generierten Ladestroms zugeordnet ist. Dieser vorbestimmte weitere Grenzwert orientiert sich an dem Maximalwert des für den elektrischen Energiespeicher zulässigen Ladestroms. Dieser Maximalwert hängt insbesondere von der Art, Größe und dem Ladezustand des jeweiligen elektrischen Energiespeichers ab. Ferner kann dieser Grenzwert temperaturabhängig an die Temperatur des elektrischen Energiespeichers jeweils angepasst sein, denn der Maximalwert des zulässigen Ladestroms für elektrische Energiespeicher ist temperaturabhängig.
Ansonsten bei "Nein" wird die in Schritt 100 durch Umwandlung erzeugte elektrische Energie oder der nicht weiter in Wärme umzuwandelnde Teil dieser elektrischen Energie dem elektrischen Energiespeicher zugeführt. Die elektrische Heizeinrichtung ist zum Beispiel ein PTC-Heizelement.

Die in Schritt 120 in Wärme umgewandelte elektrische Energie wird in Schritt 130 im Latentwärmespeichermittel der Wärmespeicheranordnung des Heizsystems als sensible Wärme und/oder als durch Phasenumwandlung latente Wärme gespeichert. Das Latentwärmespeichermittel umfasst hauptsächlich zumindest einen Zuckeralkohol, der wenigstens eine Verbindung umfasst, die ausgewählt ist aus der Gruppe, bestehend aus Erythrit, Xylit, Threit, Mannit und Dulcit. In diesem Ausführungsbeispiel besteht das Latentwärmespeichermittel ausschließlich oder nahezu ausschließlich aus Erythrit. Bei einer optionalen Variante des Verfahrens stoppt dieses vor dem Schritt 120 automatisch, wenn eine vorbestimmte Temperatur des Latentwärmespeichermittels im Bereich zwischen 121 Grad Celsius bis 200 Grad Celsius wie zum Beispiel 140 Grad Celsius überschritten wird. Kühlt das Latentwärmespeichermittel dann wieder auf beispielweise unter 130 Grad Celsius ab, startet das Verfahren wieder.

Nach Schritt 130 wird in Prüfung 140 geprüft, ob "Ja" Bedarf für das Abgeben vom in der Wärmespeicheranordnung im Latentwärmespeichemittel gespeicherter Wärme für das das Heizen von Luft für den oder in dem für Fahrzeuginsassen vorgesehenen Fahrzeuginnenraum besteht und die Luft dort unter einer vorbestimmten Solltemperatur von beispielsweise 22 Grad Celsius liegt oder ob "Nein" kein Bedarf besteht oder die Solltemperatur noch nicht unterschritten ist. Bei positiver Prüfung 140, also mit "Ja", wird im letzten Schritt 150 die in der Wärmespeicheranordnung im Latentwärmespeichermittel gespeicherte sensible und/oder latente Wärme für das Heizen von Luft für den oder in dem für Fahrzeuginsassen vorgesehenen Fahrzeuginnenraum abgegeben. Dieses erfolgt beispielsweise mit Hilfe einer dann aktivierten Wärmetauscheranordnung.

Das erfindungsgemäße Heizsystem, mit dem das erfindungsgemäße Verfahren durchgeführt werden kann, ist für Hybrid- oder Elektrofahrzeuge besonders vorteilhaft in Omnibussen einsetzbar. Die Wärmespeicherung in der Wärmespeicheranordnung mit dem erfindungsgemäßen Latentwärmespeichermittel, das vorteilhaft kostengünstig und gut verfügbar sowie gering oder gar nicht für Menschen toxisch ist, ist besonders effektiv und geeignet. Die Arbeitstemperaturen der Wärmespeicheranordnung sind ausreichend niedrig für eine nicht überaus aufwendig wärmeisolierte Positionierung in dem für Fahrzeuginsassen vorgesehenen Fahrzeuginnenraum.

## Patentansprüche

1. Heizsystem (10) für ein Hybrid- oder Elektrofahrzeug (50), umfassend wenigstens eine im Generatorbetrieb betreibbare Elektromaschine (12), wenigstens eine Wärmespeicheranordnung (32), wenigstens eine der Wärmespeicheranordnung (32) zugeordnete elektrische Heizeinrichtung (30) und eine Schaltanordnung (26), wobei die Schaltanordnung (26) dazu ausgebildet ist, wahlweise die wenigstens eine Elektromaschine (12) mit der wenigstens einen elektrischen Heizeinrichtung (30) und/oder einem elektrischen Energiespeicher (28) zu koppeln, wenn die wenigstens eine Elektromaschine (12) während eines Bremsvorgangs im Generatorbetrieb arbeitet, **dadurch gekennzeichnet,**
**dass** wenigstens eine Wärmespeicheranordnung (32) zur Wärmespeicherung ein Latentwärmespeichermittel (34), umfassend zumindest einen Zuckeralkohol, der wenigstens eine Verbindung umfasst, die ausgewählt ist aus der Gruppe, bestehend aus Erythrit, Threit, Xylit, Mannit und Dulcit, aufweist.

2. Heizsystem (10) nach Anspruch 1, **dadurch gekennzeichnet,**
**dass** das Latentwärmespeichermittel (34) ausschließlich oder nahezu ausschließlich Erythrit umfasst.

3. Heizsystem (10) nach Anspruch 1, **dadurch gekennzeichnet,**
**dass** das Latentwärmespeichermittel (34) eine Mischung aus zwei oder mehreren Zuckeralkoholen mit Verbindungen aus der Gruppe, bestehend aus Erythrit, Threit, Xylit, Mannit und Dulcit umfasst.

4. Heizsystem (10) nach Anspruch 1 bis 3, **dadurch gekennzeichnet, dass** die wenigstens eine elektrische Heizeinrichtung (30) dazu ausgebildet ist, das Latentwärmespeichermittel (34) maximal auf eine Temperatur im Bereich zwischen 121 Grad Celsius bis 200 Grad Celsius zu erwärmen.

5. Heizsystem (10) nach einem der Ansprüche 1 bis 4, **dadurch gekennzeichnet, dass** das Latentwärmespeichermittel (34) als Unterkühlungsinhibitor ein anorganisches Salz ausgewählt aus Phosphaten, Sulfaten, Pyrophosphaten, Silbersalzen anorganischer Säuren oder Silberhalogeniden umfasst.

6. Heizsystem (10) nach einem der Ansprüche 1 bis 5, **dadurch gekennzeichnet, dass** wenigstens eine Wärmespeicheranordnung (32) dazu ausgebildet ist, direkt hinter dem Fahrersitz (52) oder an, wie insbesondere auf, einem Radkasten (60) positionierbar zu sein.

7. Heizsystem (10) nach Anspruch 6, **dadurch gekennzeichnet, dass** wenigstens eine Wärmespeicheranordnung (32) für die Positionierung hinter dem Fahrersitz (52) in der Höhe maximal 181 Zentimeter, in der Breite maximal 42 Zentimeter und in der Tiefe maximal 83 Zentimeter misst, oder für die Positionierung an, wie insbesondere auf, einem Radkasten (60) in der Höhe maximal 135 Zentimeter, in der Breite maximal 99 Zentimeter und in der Tiefe maximal 83 Zentimeter misst.

8. Heizsystem (10) nach einem der Ansprüche 1 bis 7, **dadurch gekennzeichnet, dass** die wenigstens eine Wärmespeicheranordnung (32) zur direkten Übertragung von in ihr gespeicherter Wärme an zu erwärmende mit einer Luftfördereinrichtung für den für Fahrzeuginnsassen vorgesehenen Fahrzeuginnraum geförderte Luft ausgebildet ist.

9. Heizsystem (10) nach einem der Ansprüche 1 bis 8, **dadurch gekennzeichnet, dass** der zumindest einen Wärmespeicheranordnung (32) wenigstens eine Wärmetauscheranordnung (38) zur Übertragung von in der Wärmespeicheranordnung (32) gespeicherter Wärme auf ein zu erwärmendes Medium, wie insbesondere Heizwasser eines Heizkreislaufs zum Heizen der Luft des für Fahrzeuginsassen vorgesehenen Fahrzeuginnenraums, zugeordnet ist.

10. Wärmespeicheranordnung (32) zu einem Heizsystem (10) nach einem der Ansprüche 2, 4 bis 9, **dadurch gekennzeichnet, dass** die Wärmespeicheranordnung (32) zur Wärmespeicherung ein Latentwärmespeichermittel (34), umfassend ausschließlich oder nahezu ausschließlich Erythrit, aufweist.

11. Hybrid- oder Elektrofahrzeug (50), wie insbesondere ein Hybrid- oder Elektroomnibus, mit einem Heizsystem (10) nach einem der Ansprüche 1 bis 9.

12. Hybrid- oder Elektrofahrzeug (50) nach Anspruch 11, **dadurch gekennzeichnet, dass** wenigstens eine Wärmespeicheranordnung (32) des Heizsystems (10) hinter dem Fahrersitz (52) oder an, wie insbesondere auf, einem Radkasten (60) angeordnet ist.

13. Verfahren zum Wärmespeichern sowie Abgeben von gespeicherter Wärme mit einem in einem Hybrid- oder Elektrofahrzeug (50) integrierten Heizsystem (10) nach einem der Ansprüche 1 bis 9, umfassend die Schritte,
a) des Umwandelns (100) von Bewegungsenergie beim Bremsen des Hybrid- oder Elektrofahrzeugs (50) in elektrische Energie mittels wenigstens einer als Generator betriebenen Elektromaschine (12),
b) des Umwandelns (120) der elektrischen Energie in Wärme mittels der wenigstens einen der zumindest einen Wärmespeicheranordnung (32) des Heizsystems (10) zugeordneten elektrischen Heizeinrichtung (30), **gekennzeichnet durch** die weiteren Schritte
c) des Speicherns (130) von nach Schritt b) umgewandelter Wärme im Latentwärmespeichermittel (34) der wenigstens einen Wärmespeicheranordnung (32) des Heizsystems (10) durch Speicherung als sensible Wärme und/oder als durch Phasenumwandlung latente Wärme im zumindest einen Zuckeralkohol, der wenigstens eine Verbindung umfasst, die ausgewählt ist aus der Gruppe, bestehend aus Erythrit, Threit, Xylit, Mannit und Dulcit, und
d) des bei Bedarf Abgebens (150) von in der wenigstens einen Wärmespeicheranordnung (32) im Latentwärmespeichermittel (34) gespeicherter sensibler und/oder latenter Wärme für das Heizen von Luft für den oder in dem für Fahrzeuginsassen vorgesehenen Fahrzeuginnenraum.

14. Verfahren nach Anspruch 13, **dadurch gekennzeichnet, dass** das Latentwärmespeichermittel (34) ausschließlich oder nahezu ausschließlich Erythrit umfasst und das Umwandeln (120) von elektrischer Energie in Wärme in Schritt b) automatisch bei Überschreiten einer vorbestimmten Temperatur des Latentwärmespeichermittels im Bereich zwischen 121 Grad Celsius bis 200 Grad Celsius stoppt.

15. Verfahren nach Anspruch 13 oder 14, **dadurch gekennzeichnet, dass** der Schritt d) (150) erst dann erfolgt, wenn die Temperatur der Luft im für Fahrzeuginsassen vorgesehenen Fahrzeuginnraum unter einer vorbestimmten Solltemperatur liegt oder diese unterschreitet.
